# EUROPÄISCHE PATENTSCHRIFT

(11) **EP 3 215 718 B1**
(45) Veröffentlichungstag und Bekanntmachung des Hinweises auf die Patenterteilung: **02.01.2019**
(21) Anmeldenummer: 15749763.7
(22) Anmeldetag: 03.08.2015
(51) Int. Cl.: F01L 1/047, F01L 13/00

(54) **VERFAHREN ZUR MONTAGE EINES NOCKENWELLENMODULS**
METHOD FOR INSTALLING A CAMSHAFT MODULE
PROCÉDÉ DE MONTAGE D'UN MODULE D'ARBRE À CAMES

(30) Priorität: 06.11.2014 DE 102014116207
(43) Veröffentlichungstag der Anmeldung: 13.09.2017
(73) Patentinhaber: ThyssenKrupp Presta TecCenter AG, 9492 Eschen (LI)
(72) Erfinder: CURLIC, Marko, 9486 Schaanwald (LI); PFITSCHER, Aaron, 6713 Ludesch (AT); MUSTER, Manfred, 6713 Ludesch (AT)
(74) Vertreter: thyssenkrupp Intellectual Property GmbH
(86) Internationale Anmeldenummer: PCT/EP2015/067846
(87) Internationale Veröffentlichungsnummer: WO 2016/071016

(56) Entgegenhaltungen:
- DE-A1- 19 831 772
- DE-A1-102005 020 236
- DE-A1-102009 051 636
- DE-A1-102011 001 661
- DE-A1-102011 117 849
- DE-B3-102009 057 633

## Beschreibung

Die Erfindung betrifft ein Verfahren zur Montage eines Nockenwellenmoduls, aufweisend eine Modulhaube, in der wenigstens eine Nockenwelle aufgenommen wird, wobei die Nockenwelle eine Grundwelle und eine vorgesehene Anzahl von Verschiebeelementen mit an diesen ausgebildeten Nockenlaufbahnen zur Ventilsteuerung aufweist, und wobei die Verschiebeelemente an vorbestimmten Positionen in der Modulhaube angeordnet werden und wobei die Grundwelle durch in den Verschiebelementen eingebrachte Aufnahmedurchgänge entlang einer Wellenachse hindurchgeführt wird.

### STAND DER TECHNIK

Die DE 10 2004 011 586 A1 zeigt einen Nockenwellenmodul mit einer Modulhaube, und in der Modulhaube sind zwei parallel zueinander angeordnete Nockenwellen aufgenommen. Die Nockenwellen weisen Grundwellen auf, und auf jeder Grundwelle ist eine Anzahl von Verschiebeelementen aufgenommen. Die Verschiebeelemente können durch in der Modulhaube aufgenommene Aktuatoren in der Axialposition auf der Grundwelle verändert werden, so dass verschiedene Nockenlaufbahnen mit einem Abgriffselement zur Ventilsteuerung in Kontakt gebracht werden können. Beispielsweise können die Verschiebeelemente zwischen zwei oder drei diskreten Axialpositionen verschoben werden, und die Verschiebeelemente sind in Lagerbrücken aufgenommen, die Teil der Modulhaube sind. Die Grundwelle dient lediglich zur Drehmomentübertragung an die Verschiebeelemente, so dass die durch die Grundwelle und die Verschiebeelemente gebildete mehrteilige Nockenwelle durch die einzelnen Verschiebeelemente in den Lagerbrücken gelagert ist, und wobei die Grundwelle in den Aufnahmedurchgängen der Verschiebeelemente gelagert ist.

Zur Drehmomentübertragung zwischen der Grundwelle und den Verschiebeelementen weist die Grundwelle eine Außenverzahnung auf, die mit einer Innenverzahnung in den Aufnahmedurchgängen in Eingriff steht. Dadurch können die Verschiebeelemente axial verschieblich und verdrehfest auf der Grundwelle bewegt werden.

Die Verschiebeelemente besitzen Nockenlaufbahnen, die für den Betrieb einer Brennkraftmaschine eine bestimmte rotatorische Ausrichtung um die Wellenachse der Nockenwelle aufweisen müssen. Die definierte Umfangsposition der Nockenlaufbahnen, insbesondere der Nockenkuppen, dient der zeitrichtigen Ansteuerung der Ventile, und weist die Nockenwelle beispielsweise vier Verschiebeelemente auf, so müssen die ansonsten zueinander gleichen Verschiebeelemente in unterschiedlichen Winkelpositionen um die Wellenachse auf der Grundwelle angeordnet werden, um die Ansteuerung der Gaswechselventile der mehreren Zylinder der Brennkraftmaschine mit den richtigen Steuerzeiten zu ermöglichen.

Die Montage des Nockenwellenmoduls erfolgt dabei in aufeinander folgenden Schritten: Zunächst werden die Verschiebeelemente, insbesondere sämtliche eine Nockenwelle bildende Verschiebeelemente, an der Modulhaube angeordnet. Dabei muss dafür Sorge getragen werden, dass die Umfangsposition der Verschiebeelemente zueinander eine bereits für den späteren Betrieb der Nockenwelle richtige rotatorische Ausrichtung aufweisen. Das Einsetzen der Verschiebeelemente erfolgt zumeist manuell oder mit einem Greifer, der die richtige rotatorische Ausrichtung der Verschiebeelemente gewährleistet. Nachteilhafterweise muss dabei jedes einzelne Verschiebeelement anders gegriffen werden, um die jedem Verschiebeelement zugeordnete erforderliche rotatorische Ausrichtung bei Anordnung in der Modulhaube sicherzustellen. Dadurch erschwert sich die Montage des Nockenwellenmoduls und ist zudem fehleranfällig. Ein in der Umfangsrichtung auf der Grundwelle falsch ausgerichtetes Verschiebeelement kann zu kapitalen Schäden bei der späteren Inbetriebnahme einer Brennkraftmaschine mit einem solchen Nockenwellenmodul führen.

Auch in der DE 10 2005 020 236 A1 ist ein Verfahren zur Montage eines entsprechenden Nockenwellenmoduls, insbesondere einer gebauten Nockenwelle,, aufweisend eine Zahnwelle sowie wenigstens ein drehfest und axial verschiebbar auf der Welle angeordnetes Nockenelement sowie einen drehfest und axial nicht verschiebbar auf der Welle angeordnetes Nockenelement gezeigt. Hierbei werden zur Montage der Nockenwelle an einem Zylinderkopf die Nockenträger durch Distanzstücke in eine Montageposition verschoben.

In der DE 10 2009 057 633 B3 ist ebenfalls ein Verfahren zur Herstellung einer gebauten Nockenwelle offenbart, wobei die Nockenwelle zumindest ein erstes drehfest und axial verschiebbar auf dem stabförmigen Nockenwellengrundkörper angeordnetes Nockenelement sowie zumindest ein zweites drehfest und axial nicht verschiebbar auf dem stabförmigen Nockenwellengrundkörper angeordnetes Nockenelement aufweist. Der Nockenwellengrundkörper wird derart bearbeitet, dass dieser zwei zueinander unterschiedliche axiale Teilabschnitte aufweist, wobei der erste Teilabschnitt ein Außenoberflächenprofil und der zweite Teilabschnitt einen erweiterten Außendurchmesser aufweisen. Das erste Nockenelement wird auf dem ersten Teilabschnitt und das zweite Nockenelement auf dem zweiten Teilabschnitt angeordnet.

Das Dokument DE 198 31 772 A1 offenbart ein Montageverfahren einer Nockenwelle.

### OFFENBARUNG DER ERFINDUNG

Aufgabe der Erfindung ist die Weiterbildung eines Verfahrens zur Montage eines Nockenwellenmoduls, das eine vereinfachte Anordnung von Verschiebeelementen in der Modulhaube ermöglicht, bevor die Grundwelle durch die Aufnahmedurchgänge der Verschiebeelemente hindurchgeführt wird. Weiterhin soll erreicht werden, dass die Montage der Nockenwelle in der Modulhaube mit der Anordnung der Verschiebeelemente und der Grundwelle zur Bildung der Nockenwelle weniger fehleranfällig ausgeführt werden kann.

Diese Aufgabe wird ausgehend von einem Verfahren gemäß den bekannten Merkmalen des Anspruchs 1 in Verbindung mit den die Erfindung kennzeichnenden Merkmalen gelöst. Vorteilhafte Weiterbildungen der Erfindung sind in den abhängigen Ansprüchen angegeben.

Erfindungsgemäß weist das Verfahren die folgenden Schritte auf:
a) Anordnen wenigstens eines ersten Verschiebeelementes in einer ersten Position in der Modulhaube;
b) Einführen der Grundwelle in die Modulhaube und Hindurchführen der Grundwelle durch den Aufnahmedurchgang des ersten Verschiebeelementes;
c) Anordnen eines weiteren Verschiebeelementes in einer weiteren Position in der Modulhaube;
d) Drehen der Grundwelle um die Wellenachse mit dem ersten Verschiebeelement um einem Winkelbetrag;
e) weiteres Vorschieben der Grundwelle und Hindurchführen der Grundwelle durch den Aufnahmedurchgang des weiteren Verschiebeelementes und
f) Wiederholen der Schritte c), d) und e) bis die vorgesehene Anzahl von Verschiebeelementen auf der Grundwelle aufgenommen ist, wobei die Verschiebeelemente mit einer zueinander gleichen rotatorischen Ausrichtung um die Wellenachse an die Positionen angeordnet werden.

Durch das erfindungsgemäße Anordnen der Verschiebeelemente mit einer zueinander gleichen rotatorischen Ausrichtung ergibt sich der wesentliche Vorteil, dass das Anordnen der Verschiebeelemente in einer immer gleichen Weise erfolgt, und es kann für jedes Verschiebeelement ein einheitlicher Greifer verwendet werden, durch den die Verschiebeelemente in einer definierten Position ausgerichtet in der Modulhaube eingesetzt werden. Es muss also nicht mehr darauf geachtet werden, die Verschiebeelemente bereits vor dem Hindurchführen der Grundwelle in der richtigen rotatorischen Ausrichtung in die Modulhaube einzusetzen. Dadurch ergibt sich weiterhin eine wesentlich geringere Fehleranfälligkeit bei der Montage des Nockenwellenmoduls, wobei gemäß einem weiteren Vorteil eine verbesserte Automatisierbarkeit bei der Handhabung der Verschiebeelemente zur Montage an der Modulhaube ermöglicht wird. Im Rahmen der Erfindung wird unter einer rotatorischen Ausrichtung die Ausrichtung einer Winkellage der Verschiebeelemente um eine Wellenachse zueinander verstanden, sodass die Verschiebeelemente für den späteren Einsatz in einer Brennkraftmaschine die Ventile insbesondere verschiedener Zylinder mit fest vorgegebenen Steuerzeiten ansteuern können.

Gemäß einer vorteilhaften Variante zur Ausführung des Verfahrens können alle Verschiebeelemente mit einer gleichen rotatorischen Ausrichtung um die Wellenachse an ihre Positionen in der Modulhaube angeordnet werden, und erst anschließend kann die Grundwelle durch die Aufnahmedurchgänge in den Verschiebeelementen unter Ausführung der Drehung der Grundwelle mit dem Winkelbetrag zwischen den Verschiebeelementen geführt werden. Alternativ zur vorherigen Anordnung der Verschiebeelemente an der Modulhaube können die Verschiebeelemente auch nacheinander an der Modulhaube angeordnet werden. Beispielsweise kann ein erstes Verschiebeelement an der Modulhaube angeordnet werden, und die Grundwelle wird in die Modulhaube eingeführt und durch den Aufnahmedurchgang durch das Verschiebeelement geführt. Anschließend wird die Grundwelle mit dem Verschiebeelement um den erforderlichen Winkelbetrag verdreht, wobei darauffolgend das weitere Verschiebeelement an der Modulhaube angeordnet wird, und die Grundwelle wird in Wellenachsenrichtung weiter vorgeschoben, bis die Grundwelle auch durch den Aufnahmedurchgang im zweiten Verschiebeelement hindurchgeführt ist. Anschließend wird die Grundwelle wieder um den erforderlichen Winkelbetrag verdreht, wobei die ersten beiden Verschiebeelemente entsprechend mit verdreht werden. Folglich kann die Anordnung der Verschiebeelemente wechselweise mit der weiteren Hindurchführung der Grundwelle und der Verdrehung um den Winkelbetrag an der Modulhaube erfolgen. Beispielsweise kann die Nockenwelle zur Anordnung an der Modulhaube vier Verschiebeelemente umfassen, so dass insgesamt drei Mal eine Drehung der Grundwelle um den Winkelbetrag ausgeführt wird.

Der Winkelbetrag kann einen Wert aufweisen, der einem Winkelversatz der Verschiebeelemente in Betrieb des Nockenwellenmoduls in Anordnung an einer Brennkraftmaschine entspricht. Beispielsweise kann die Nockenwelle in ihrer Anordnung im Nockenwellenmodul zur Ventilbetätigung von drei, vier, fünf oder sechs Zylindern einer Brennkraftmaschine ausgeführt sein, so dass die Nockenwelle drei, vier, fünf oder sechs Verschiebeelemente aufweist. Jedes Verschiebeelement weist dabei einen definierten, insbesondere gleichen Winkelversatz um die Wellenachse auf, und beispielsweise kann der Winkelbetrag einen Wert von 90 Grad aufweisen.

Nach einer besonders vorteilhaften Ausgestaltung des Verfahrens kann die Grundwelle wenigstens abschnittsweise eine Außenlängsverzahnung aufweisen, insbesondere kann die Grundwelle eine Außenlängsverzahnung aufweisen, die sich in gleichförmiger Ausbildung über der im Wesentlichen gesamten Länge der Grundwelle erstreckt. Weiterhin kann in den Aufnahmedurchgängen der Verschiebeelemente eine Innenverzahnung vorgesehen sein, wobei beim Hindurchführen der Grundwelle durch die Aufnahmedurchgänge die Außenlängsverzahnung in die Innenverzahnung einkämmt. Die Zahnteilung der Außenlängsverzahnung und der Innenverzahnung ist dabei so ausgebildet, dass die Grundwelle um den Winkelbetrag verdreht werden kann, so dass Zähne der Innenverzahnung in die Zahnzwischenräume der Außenlängsverzahnung einkämmen können. Die Zahnteilung der Verzahnung ist folglich so ausgebildet, dass der Winkelbetrag zur Verdrehung der Grundwelle gegenüber dem Verschiebeelement ausgeführt werden kann, ohne dass das Einkämmen der Außenlängsverzahnung der Grundwelle in die Innenverzahnung der Verschiebeelemente gestört wäre.

Eine axial verschiebbare und zugleich verdrehfeste Anordnung des Verschiebeelementes auf der Grundwelle kann alternativ auch erreicht werden, wenn die Grundwelle als Polygonwelle ausgeführt ist und in den Aufnahmedurchgängen der Verschiebeelemente kann eine Gegengeometrie für die Polygonwelle ausgebildet sein, wobei beim Hindurchführen der Polygonwelle durch die Aufnahmedurchgänge die Polygonkontur der Polygonwelle in die Gegengeometrie ebenfalls einkämmen kann.

Nach einer weiteren vorteilhaften Ausgestaltung des Verfahrens kann die Modulhaube Lagerbrücken aufweisen, wobei die Verschiebeelemente in ihrer zueinander gleichen rotatorischen Ausrichtung um die Wellenachse an den Lagerbrücken drehbar angeordnet werden. Die Nockenwelle kann über die Verschiebeelemente in Anordnung in den Lagerbrücken gelagert werden, ohne dass eine separate Lagerung der Grundwelle in der Modulhaube notwendig wäre.

Insbesondere können die Verschiebeelemente in den Lagerbrücken angeordnet werden, wobei die Anordnung mit einem Greifer erfolgen kann, und wobei das Hindurchführen der Grundwelle durch den Aufnahmedurchgang des entsprechenden Verschiebeelementes erfolgen kann, während der Greifer das Verschiebeelement noch greift. Ist die Grundwelle durch den Aufnahmedurchgang des Verschiebeelementes hindurchgeführt worden, kann der Greifer vom Verschiebeelement gelöst werden, und die Verdrehung der Grundwelle kann mit dem Verschiebeelement in Anordnung in der Lagerbrücke ausgeführt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Ansicht eines Nockenwellenmoduls mit einer Modulhaube und mit vier in der Modulhaube angeordneten Verschiebeelementen, wobei eine Grundwelle von der Außenseite der Modulhaube zugeführt wird,
- Fig. 2: die Ansicht des Nockenwellenmoduls gemäß Fig. 1, wobei die Grundwelle durch ein erstes Verschiebeelement hindurchgeführt ist,
- Fig. 3: die Ansicht des Nockenwellenmoduls gemäß Fig. 2, wobei die Grundwelle durch ein weiteres Verschiebeelement hindurchgeführt ist,
- Fig. 4: die Ansicht des Nockenwellenmoduls gemäß Fig. 3, wobei die Grundwelle durch ein weiteres Verschiebeelement hindurchgeführt ist und
- Fig. 5: die Ansicht des Nockenwellenmoduls mit einer Grundwelle, die durch sämtliche Verschiebeelemente hindurchgeführt ist, so dass in der Modulhaube eine fertig konfektionierte Nockenwelle ausgebildet ist.

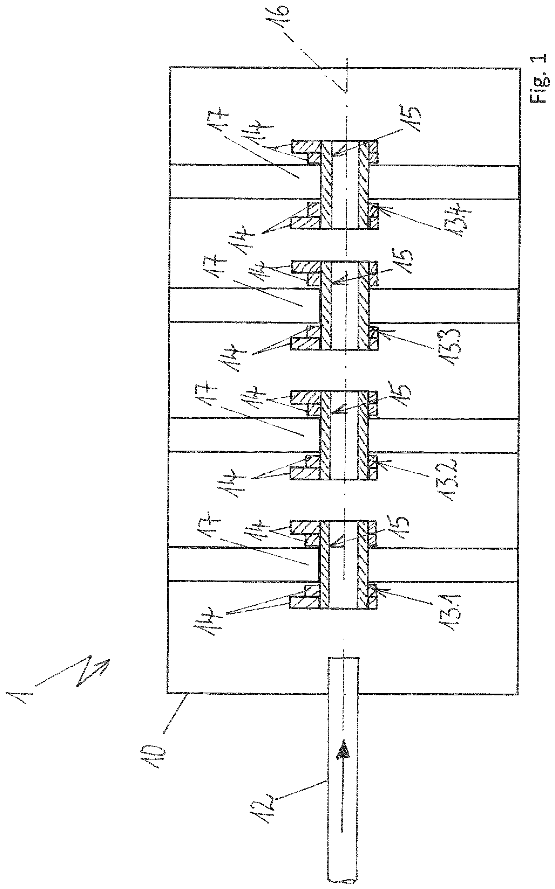

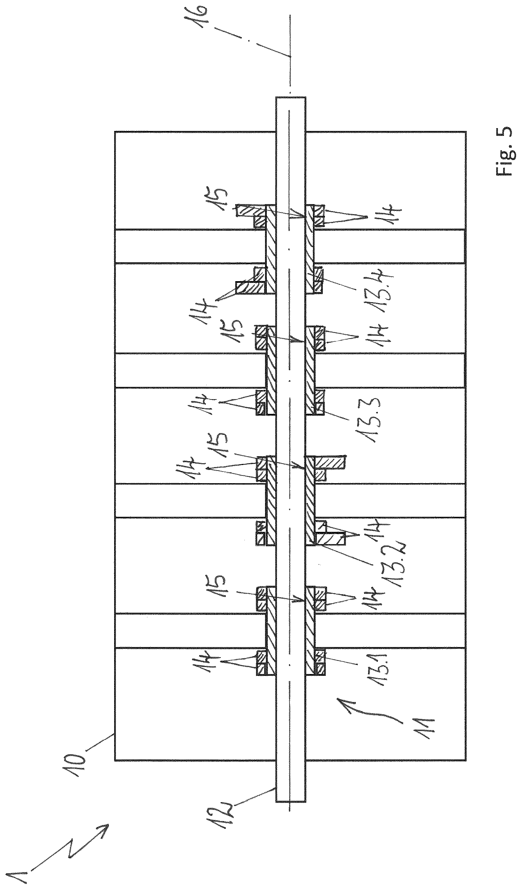

Die Figuren 1 bis 5 zeigen jeweils eine schematische Ansicht eines Nockenwellenmoduls 1, in dem beispielhaft eine einzige Nockenwelle 11 mit den in den Figuren 1 bis 5 dargestellten Schritten angeordnet wird. Das Nockenwellenmodul 1 dient zur Anordnung auf einem Zylinderkopf einer Brennkraftmaschine, und die Nockenwelle 11, vollständig gezeigt in Figur 5, dient zur Ansteuerung von Gaswechselventilen der Brennkraftmaschine.

Das Nockenwellenmodul 1 weist eine rahmenartige Modulhaube 10 auf, und in der Modulhaube 10 sind Lagerbrücken 17 ausgebildet, die zur drehbaren Aufnahme von Verschiebeelementen 13.1, 13.2, 13.3 und 13.4 dienen. Die Verschiebeelemente 13.1, 13.2, 13.3 und 13.4 weisen Nockenlaufbahnen 14 auf, die, wie in Figur 1 gezeigt, zur Vorbereitung des Zusammenbaus der Nockenwelle 11 alle in eine gemeinsame, gleiche Richtung weisen. Die Verschiebeelemente 13.1, 13.2, 13.3 und 13.4 können mit einem Greifer in die Lagerbrücken 17 eingesetzt werden, wobei, abweichend von der Darstellung in Figur 1, die Verschiebeelemente 13.1, 13.2, 13.3 und 13.4 auch nacheinander in die Lagerbrücken 17 eingesetzt werden können, sodass zunächst auch nur das erste Verschiebelement 13.1 in der Lagerbrücke 17 angeordnet sein könnte.

Die Verschiebeelemente 13.1, 13.2, 13.3 und 13.4 sind mit den Nockenlaufbahnen 14 nur schematisch gezeigt, und die Darstellung der Nockenlaufbahnen 14 mit der gezeigten Form und Anzahl dient nur der Darstellung der Rotationsposition der Verschiebeelemente 13.1, 13.2, 13.3 und 13.4 um die Wellenachse 16, ferner sind der Einfachheit halber keine Steuerkurven gezeigt. Insbesondere die kompakte Darstellung der Verschiebeelemente 13.1, 13.2, 13.3 und 13.4 mit der fehlenden dargestellten Verschiebbarkeit dient lediglich der Vereinfachung der Figuren und die Form und Größe der einzelnen Komponenten zueinander, insbesondere der Verschiebeelemente 13.1, 13.2, 13.3 und 13.4, der Nockenlaufbahnen 14 und der Lagerbrücken 17, sind nicht maßstäblich zueinander.

Von einer Außenseite wird, wie durch einen Pfeil dargestellt, eine Grundwelle 12 hinzugeführt. Die Grundwelle 12 dient zum Hindurchführen durch Aufnahmedurchgänge 15, die in den Verschiebeelementen 13.1, 13.2, 13.3 und 13.4 ausgebildet sind. Im Folgenden wird das Montageverfahren mit den einzelnen Schritten anhand der Figuren 1, 2, 3, 4 und 5 beschrieben.

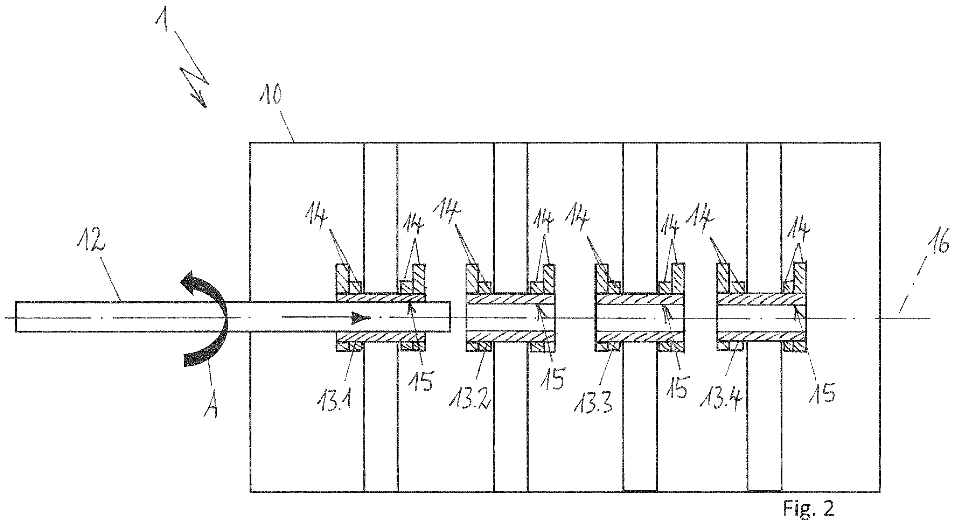

Figur 1 zeigt eine Anordnung der Grundwelle 12 außerhalb der Verschiebeelemente 13.1, 13.2, 13.3 und 13.4. Das Ausführungsbeispiel zeigt die vollständige Anordnung der Verschiebeelemente 13.1, 13.2, 13.3 und 13.4 in der Modulhaube 10, und die Grundwelle 12 kann, wie in Figur 2 dargestellt, durch den Aufnahmedurchgang 15 im ersten Verschiebeelement 13.1 hindurchgeführt werden. Ist die Grundwelle 12 durch den Aufnahmedurchgang 15 des ersten Verschiebeelementes 13.1 hindurchgeführt worden, wird die Grundwelle 12 um einen Winkelbetrag A, dargestellt durch einen Rotationspfeil, verdreht, beispielhaft mit einem Wert von 90 Grad.

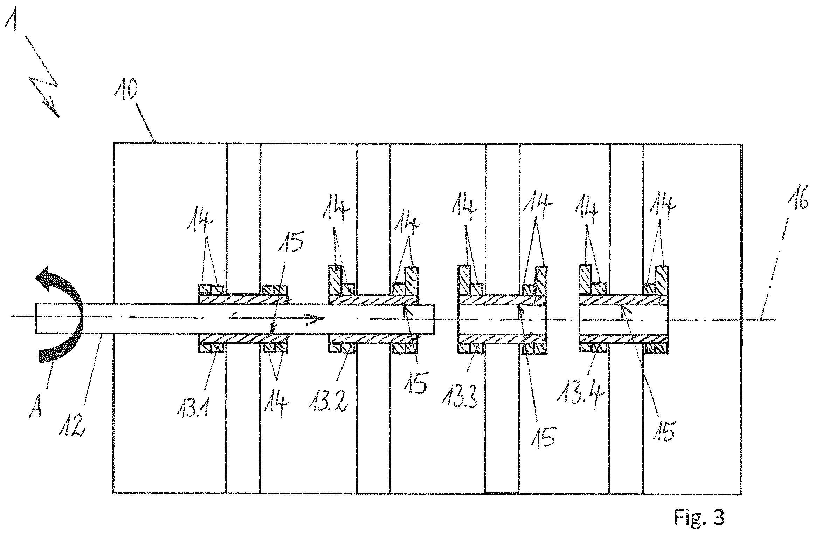

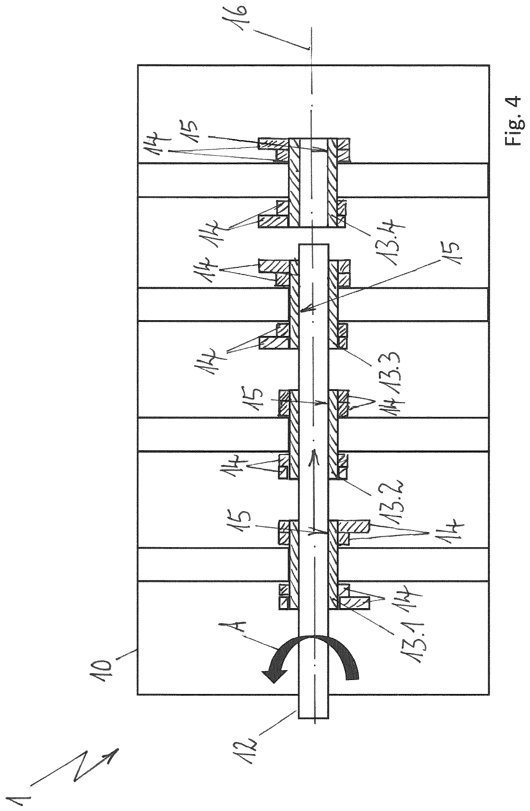

Nicht dargestellt ist eine Innenverzahnung in den Aufnahmedurchgängen 15 der Verschiebeelemente 13.1, 13.2, 13.3 und 13.4, und die Grundwelle 12 ist mit einer Außenlängsverzahnung ausgebildet, so dass nach Hindurchführung der Grundwelle 12 durch die Aufnahmedurchgänge 15 die Verschiebeelemente 13.1, 13.2, 13.3 und 13.4 verdrehfest und axial verschieblich auf der Grundwelle 12 angeordnet sind. Folglich verdreht das erste Verschiebeelement 13.1 mit dem gleichen Winkelbetrag A um die Wellenachse 16, und die Darstellung in Figur 2 im Übergang in die Darstellung in Figur 3 zeigt, dass die Grundwelle 12 mit dem Verschiebeelement 13.1 um 90 Grad verdreht wurde, bevor die Grundwelle 12 in den Aufnahmedurchgang 15 des zweiten Verschiebeelementes 13.3 weiter fortgeschoben wurde. Anschließend wird, wie im Übergang zwischen der Figur 3 und der Figur 4 gezeigt, die Grundwelle 12 mit den Verschiebeelementen 13.1 und 13.2 wieder mit dem Winkelbetrag A, beispielhaft 90 Grad, um die Wellenachse 16 verdreht, so dass die Nockenlaufbahnen 14 jeweils im Vergleich zur vorhergehenden Figur um 90 Grad verdreht sind, und beispielsweise ist die Nockenlaufbahn des Verschiebeelementes 13.1 in der Figur 3 aus der Schnittebene herausgedreht, und durch eine Weiterdrehung um den Winkelbetrag A mit einem Wert von 90 Grad zeigt Figur 4 die Nockenlaufbahn 14 des Verschiebeelementes 13.1 in einer 180 Grad gegenüberliegenden Position im Vergleich zur Position der Nockenlaufbahn 14 des Verschiebeelementes 13.1 in Figur 2.

Das weitere Fortschieben der Grundwelle 12 durch die Aufnahmedurchgänge 15 in die weiteren Verschiebeelemente 13.3 und 13.4 zeigt die Figur 4 im Übergang in die Figur 5. Nach dem Hindurchführen der Grundwelle 12 durch den Aufnahmedurchgang 15 im Verschiebeelement 13.4 erfolgt keine weitere Drehung der Grundwelle 12 um einen Winkelbetrag A, da, wie an den Nockenlaufbahnen 14 der Verschiebeelemente 13.1, 13.2, 13.3 und 13.4 in Figur 5 dargestellt, die rotatorische Ausrichtung der Nockenlaufbahnen 14 jeweils um 90 Grad versetzt sind, wie für den späteren Betrieb der Brennkraftmaschine gefordert. Das Nockenwellenmodul 1 mit der so gebildeten Nockenwelle 11 kann nunmehr in Betrieb genommen werden, und die Verschiebeelemente 13.1, 13.2, 13.3 und 13.4 weisen für den späteren Ventiltrieb der Brennkraftmaschine die jeweils erforderliche rotatorische Ausrichtung zueinander auf.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein. Insbesondere müssen die gezeigten Verschiebeelemente 13.1, 13.2, 13.3 und 13.4 nicht bereits in einer vollständigen Anzahl in den jeweiligen Lagerbrücken 17 angeordnet werden, und diese können auch nacheinander angeordnet werden, nachdem die Grundwelle 12 durch das jeweilige Verschiebeelement hindurchgeführt wurde und nachdem die Drehung der Grundwelle 12 um den Winkelbetrag A ausgeführt wurde.

### Bezugszeichenliste

- 1: Nockenwellenmodul

- 10: Modulhaube
- 11: Nockenwelle
- 12: Grundwelle
- 13.1: Verschiebelement
- 13.2: Verschiebelement
- 13.3: Verschiebelement
- 13.4: Verschiebelement
- 14: Nockenlaufbahn
- 15: Aufnahmedurchgang
- 16: Wellenachse
- 17: Lagerbrücke

## Patentansprüche

1. Verfahren zur Montage eines Nockenwellenmoduls (1), aufweisend eine Modulhaube (10), in der wenigstens eine Nockenwelle (11) aufgenommen wird, wobei die Nockenwelle (11) eine Grundwelle (12) und eine vorgesehene Anzahl von Verschiebeelementen (13.1, 13.2, 13.3, 13.4) mit an diesen ausgebildeten Nockenlaufbahnen (14) zur Ventilsteuerung aufweist, und wobei die Verschiebeelemente (13.1, 13.2, 13.3, 13.4) an vorbestimmten Positionen in der Modulhaube (10) angeordnet werden und wobei die Grundwelle (12) durch in den Verschiebelementen (13.1, 13.2, 13.3, 13.4) eingebrachte Aufnahmedurchgänge (15) entlang einer Wellenachse (16) hindurchgeführt wird, wobei das Verfahren wenigstens die folgenden Schritte aufweist:
a) Anordnen wenigstens eines ersten Verschiebeelementes (13.1) in einer ersten Position in der Modulhaube (10);
b) Einführen der Grundwelle (12) in die Modulhaube (10) und Hindurchführen der Grundwelle (12) durch den Aufnahmedurchgang (15) des ersten Verschiebeelementes (13.1);
c) Anordnen eines weiteren Verschiebeelementes (13.2) in einer weiteren Position in der Modulhaube (10);
d) Drehen der Grundwelle (12) um die Wellenachse (16) mit dem ersten Verschiebeelement (13.1) um einem Winkelbetrag (A);
e) weiteres Vorschieben der Grundwelle (12) und Hindurchführen der Grundwelle (12) durch den Aufnahmedurchgang (15) des weiteren Verschiebeelementes (13.2);
f) Wiederholen der Schritte c), d) und e), bis die vorgesehene Anzahl von Verschiebeelementen (13.1, 13.2, 13.3, 13.4) auf der Grundwelle (12) aufgenommen ist, wobei die Verschiebeelemente (13.1, 13.2, 13.3, 13.4) mit einer zueinander gleichen rotatorischen Ausrichtung um die Wellenachse (16) an den Positionen angeordnet werden.

2. Verfahren nach Anspruch 1, **dadurch gekennzeichnet, dass** die Anordnung der Verschiebeelemente (13.1, 13.2, 13.3, 13.4) an den Positionen in der Modulhaube (10) durch einen Greifer erfolgt, wobei der Greifer die Verschiebeelemente (13.1, 13.2, 13.3, 13.4) mit der gleichen rotatorischen Ausrichtung um die Wellenachse (16) an den Positionen angeordnet.

3. Verfahren nach Anspruch 1 oder 2, **dadurch gekennzeichnet, dass** die vorgesehene Anzahl von Verschiebelementen (13.1, 13.2, 13.3, 13.4) mit einer gleichen rotatorischen Ausrichtung um die Wellenachse (16) an den Positionen in der Modulhaube (10) angeordnet werden, wobei anschließend die Grundwelle (12) durch die Aufnahmedurchgänge (15) in den Verschiebelementen (13.1, 13.2, 13.3, 13.4) unter Ausführung der Drehung der Grundwelle (12) mit dem Winkelbetrag (A) zwischen den Verschiebelementen (13.1, 13.2, 13.3, 13.4) geführt wird.

4. Verfahren nach einem der Ansprüche 1 bis 3, **dadurch gekennzeichnet, dass** der Winkelbetrag (A) einen Wert aufweist, der einem Winkelversatz der Verschiebelemente (13.1, 13.2, 13.3, 13.4) im Betreib des Nockenwellenmoduls (1) in Anordnung an einer Brennkraftmaschine entspricht.

5. Verfahren nach einem der vorgenannten Ansprüche, **dadurch gekennzeichnet, dass** der Winkelbetrag (A) einen Wert von 90° aufweist.

6. Verfahren nach einem der vorgenannten Ansprüche, **dadurch gekennzeichnet, dass** die Grundwelle (12) wenigstens abschnittsweise eine Außenlängsverzahnung aufweist, wobei in den Aufnahmedurchgängen (15) der Verschiebelemente (13.1, 13.2, 13.3, 13.4) eine Innenverzahnung vorgesehen ist, und wobei beim Hindurchführen der Grundwelle (12) durch die Aufnahmedurchgänge (15) die Außenlängsverzahnung in die Innenverzahnung einkämmt.

7. Verfahren nach einem der vorgenannten Ansprüche, **dadurch gekennzeichnet, dass** die Modulhaube (10) Lagerbrücken (17) aufweist, wobei die Verschiebelemente (13.1, 13.2, 13.3, 13.4) in ihrer zueinander gleichen rotatorischen Ausrichtung um die Wellenachse (16) an den Lagerbrücken (17) drehbar angeordnet werden.

## Claims

1. Method for installing a camshaft module (1) comprising a module hood (10), in which at least one camshaft (11) is accommodated, wherein the camshaft (11) comprises a main shaft (12) and an envisaged number of displacement elements (13.1, 13.2, 13.3, 13.4) with cam tracks (14) formed thereon for valve-control purposes, and wherein the displacement elements (13.1, 13.2, 13.3, 13.4) are arranged at predetermined positions in the module hood (10), and wherein the main shaft (12) is guided, along a shaft axis (16), through accommodating passages (15) made in the displacement elements (13.1, 13.2, 13.3, 13.4), wherein the method comprises at least the following steps:
a) arranging at least a first displacement element (13.1) in a first position in the module hood (10);
b) introducing the main shaft (12) into the module hood (10) and guiding the main shaft (12) through the accommodating passage (15) of the first displacement element (13.1);
c) arranging a further displacement element (13.2) in a further position in the module hood (10) ;
d) rotating the main shaft (12) about the shaft axis (16), with the first displacement element (13.1), by an angular amount (A);
e) further advancing the main shaft (12) and guiding the main shaft (12) through the accommodating passage (15) of the further displacement element (13.2);
f) repeating steps c), d) and e) until the envisaged number of displacement elements (13.1, 13.2, 13.3, 13.4) is accommodated on the main shaft (12), wherein the displacement elements (13.1, 13.2, 13.3, 13.4) are each arranged at the positions with an identical rotary orientation about the shaft axis (16).

2. Method according to Claim 1, **characterized in that** the displacement elements (13.1, 13.2, 13.3, 13.4) are arranged at the positions in the module hood (10) by a gripper, wherein the gripper arranged the displacement elements (13.1, 13.2, 13.3, 13.4) at the positions with identical rotary orientation about the shaft axis (16).

3. Method according to Claim 1 or 2, **characterized in that** the envisaged number of displacement elements (13.1, 13.2, 13.3, 13.4) are arranged at the positions in the module hood (10) with an identical rotary orientation about the shaft axis (16), wherein the main shaft (12) is then guided through the accommodating passages (15) in the displacement elements (13.1, 13.2, 13.3, 13.4), with the main shaft (12) being rotated by the angular amount (A) between the displacement elements (13.1, 13.2, 13.3, 13.4).

4. Method according to one of Claims 1 to 3, **characterized in that** the angular amount (A) comprises a value which corresponds to an angular offset of the displacement elements (13.1, 13.2, 13.3, 13.4) during operation of the camshaft module (1) arranged in an internal combustion engine.

5. Method according to one of the preceding claims, **characterized in that** the angular amount (A) comprises a value of 90°.

6. Method according to one of the preceding claims, **characterized in that** the main shaft (12), at least in part, comprises an external longitudinal toothing arrangement, wherein an internal toothing arrangement is provided in the accommodating passages (15) of the displacement elements (13.1, 13.2, 13.3, 13.4), and wherein the external longitudinal toothing arrangement meshes in the internal toothing arrangement when the main shaft (12) is guided through the accommodating passages (15) .

7. Method according to one of the preceding claims, **characterized in that** the module hood (10) comprises bearing bridges (17), wherein the displacement elements (13.1, 13.2, 13.3, 13.4) are arranged in a rotatable manner on the bearing bridges (17) in their identical rotary orientation about the shaft axis (16).

## Revendications

1. Procédé de montage d'un module d'arbre à cames (1), présentant un capot de module (10), dans lequel au moins un arbre à cames (11) est placé, dans lequel l'arbre à cames (11) présente un arbre de base (12) et un nombre prévu d'éléments de déplacement (13.1, 13.2, 13.3, 13.4) avec des pistes de roulement de cames (14) formées sur ceux-ci pour la commande de soupapes, et dans lequel les éléments de déplacement (13.1, 13.2, 13.3, 13.4) sont disposés à des positions prédéterminées dans le capot de module (10) et dans lequel l'arbre de base (12) est mené le long d'un axe d'arbre (16) à travers des passages de réception (15) pratiqués dans les éléments de déplacement (13.1, 13.2, 13.3, 13.4), dans lequel le procédé présente au moins les opérations suivantes:
a) disposer au moins un premier élément de déplacement (13.1) dans une première position dans le capot de module (10) ;
b) introduire l'arbre de base (12) dans le capot de module (10) et mener l'arbre de base (12) à travers le passage de réception (15) du premier élément de déplacement (13.1);
c) disposer un autre élément de déplacement (13.2) dans une autre position dans le capot de module (10);
d) faire tourner l'arbre de base (12) autour de l'axe d'arbre (16) avec le premier élément de déplacement (13.1) d'une valeur angulaire (A);
e) faire à nouveau avancer l'arbre de base (12) et mener l'arbre de base (12) à travers le passage de réception (15) de l'autre élément de déplacement (13.2);
f) répéter les opérations c), d) et e) jusqu'à ce que le nombre prévu d'éléments de déplacement (13.1, 13.2, 13.3, 13.4) soient repris sur l'arbre de base (10), dans lequel les éléments de déplacement (13.1, 13.2, 13.3, 13.4) sont disposés dans les positions avec une orientation rotative égale l'un par rapport à l'autre autour de l'axe d'arbre (16) .

2. Procédé selon la revendication 1, **caractérisé en ce que** l'agencement des éléments de déplacement (13.1, 13.2, 13.3, 13.4) dans les positions dans le capot de module (10) est effectué au moyen d'une pince, dans lequel la pince dispose les éléments de déplacement (13.1, 13.2, 13.3, 13.4) dans les positions avec la même orientation rotative autour de l'axe d'arbre (16).

3. Procédé selon la revendication 1 ou 2, **caractérisé en ce que** l'on dispose le nombre prévu d'éléments de déplacement (13.1, 13.2, 13.3, 13.4) dans les positions dans le capot de module (10) avec une orientation rotative égale autour de l'axe d'arbre (16), dans lequel on mène ensuite l'arbre de base (12) à travers les passages de réception (15) dans les éléments de déplacement (13.1, 13.2, 13.3, 13.4) en effectuant une rotation de l'arbre de base (12) avec une valeur angulaire (A) entre les éléments de déplacement (13.1, 13.2, 13.3, 13.4).

4. Procédé selon l'une quelconque des revendications 1 à 3, **caractérisé en ce que** la valeur angulaire (A) présente une valeur, qui correspond à un décalage angulaire des éléments de déplacement (13.1, 13.2, 13.3, 13.4) pendant le fonctionnement du module d'arbre à cames (1) agencé sur un moteur à combustion interne.

5. Procédé selon l'une quelconque des revendications précédentes, **caractérisé en ce que** la valeur angulaire (A) présente une valeur de 90°.

6. Procédé selon l'une quelconque des revendications précédentes, **caractérisé en ce que** l'arbre de base (12) présente au moins localement une denture longitudinale extérieure, dans lequel il est prévu une denture intérieure dans les passages de réception (15) des éléments de déplacement (13.1, 13.2, 13.3, 13.4), et dans lequel la denture longitudinale extérieure engrène avec la denture intérieure lorsque l'on mène l'arbre de base (12) à travers les passages de réception (15).

7. Procédé selon l'une quelconque des revendications précédentes, **caractérisé en ce que** le capot de module (10) présente des ponts formant palier, dans lequel les éléments de déplacement (13.1, 13.2, 13.3, 13.4) sont disposés de façon rotative sur les ponts formant palier avec leur orientation rotative égale l'un par rapport à l'autre autour de l'axe d'arbre (16).
